# EUROPEAN PATENT APPLICATION

(11) **EP 1 704 912 A1**
(43) Date of publication of application: **27.09.2006**
(21) Application number: 06111646.3
(22) Date of filing: 23.03.2006
(51) Int. Cl.: B01D 65/08, B01D 65/02, C02F 1/44

(54) **Method for cleaning separation membrane**

(30) Priority: 24.03.2005 JP 2005085579; 13.01.2006 JP 2006005472; 23.02.2006 JP 2006046093
(71) Applicant: NGK INSULATORS, LTD., Nagoya-shi, Aichi 467-8530 (JP)
(72) Inventor: Kando, Koichiro, Nagoya-shi 467-8530 (JP); Noguchi, Motoharu, Nagoya-shi 467-8530 (JP)
(74) Representative: TBK-Patent

(57) **Abstract**

Pulse back washing for applying a back pressure from the filtrate side to the raw water side of the membrane is repeated plural times for recovering a TMP during usual main back washing applied by suspending membrane filtration, when the TMP is increased when tank water extracted out of a biological treatment tank 1 is filtrated through the membrane by a cross-flow method. Pulse back washing is applied at a stage when the TMP is 80% or less of the permissible TMP to peel the deposits on the membrane surface, and the peeled deposits are returned to the biological treatment tank concomitantly with a circulating flow. Clogging substances on the separation membrane is removed in a direction opposite to the direction of pulse back washing by selecting the destination of discharge of back wash drain to be the inlet side of the separation membrane in the main back wash step.

## Description

### BACKGROUND OF THE INVENTION

### 1. Field of the Invention

The invention relates to a method for cleaning a separation membrane. In particular, the invention relates to a method for cleaning a separation membrane used for a membrane bioreactor process and the like. The invention can be widely applied in the technical field of waste water treatment such as treatment of sewage, sidestreams, industrial wastewater, leachate , night soil, agricultural waste water, live-stock waste water and fish-breeding waste water.

### 2. Description of the Related Art

Treated water is produced by a membrane bioreactor process in which water in a biological treatment tank that treats activated sludge is filtrated by using a separation membrane. This process is particularly noticed mainly in sewage treatment plants in urban areas since it enables reduction of installation space compared with the conventional method using a settling basin.

The separation membranes used for the purposes above include an submerged type membrane installed in the biological treatment tank as disclosed in Japanese Patent Application Laid-Open (JP-A) No. 9-136021, and another type membrane installed outside of the biological treatment tank. While the submerged type separation membrane may always be cleaned by allowing floating solid particles to contact the membrane surface by means of air bubbles as disclosed in the above patent application, a conventional cleaning method is employed for removing deposits from the membrane surface for the membrane used as the outside installation type, wherein the membrane is cleaned by back washing with water and chemical cleaning after periodically suspending the filtration operation.

The conventionally used cleaning method is named as main back washing method. Examples of main back washing include simple back washing with water, combined back washing of washing with water and air blow cleaning, and combined washing of chemical cleaning followed by back washing with water and air blow cleaning. Any of the process above always comprises the steps of suspending usual filtration operation, peeling the deposits on the membrane surface by back washing, and discharging the sludge to the outside of a membrane module from the primary side of the membrane. When a chemical is used for main back washing, the deposits are dissolved with hypochlorous acid and the like prior to back washing with water.

However, a long suspension time is required for main back washing step that reduces the operation ratio of the plant. Moreover, since a large volume of treated water is used as back washing water, there arises a problem that recovery ratio of water is lowered. The cost of chemicals increases by applying the conventional main back washing step using chemical cleaning at the same time for every operation of the plant, while the quality of the membrane may be deteriorated depending on the material of the separation membrane and the activity of the activated sludge may be decreased. These problems are particularly evident when filtration flux of the separation membrane is enhanced.

### SUMMARY OF THE INVENTION

Accordingly, it is an object of the invention to provide a method for cleaning the separation membrane capable of cleaning the separation membrane while the operation ratio of the membrane filtration plant and water recovery ratio are suppressed from being decreased, and being able to save the cost of chemicals when a chemical is used for cleaning.

The invention provides a method for cleaning a separation membrane by filtrating tank water extracted out of a biological treatment tank through a membrane by a cross-flow method, comprising the steps of: peeling deposits on the membrane surface by applying a back pressure from a filtrate side to a raw water side of the membrane during main back washing by suspending circulating flow and membrane filtration; and repeating pulse back washing several times for allowing washing water to return to the biological treatment tank concomitantly with a circulating flow. Pulse back washing is preferably performed at a stage where a differential pressure through the separation membrane is not higher than 80%, more preferably not higher than 50%, of a permissible differential pressure through the membrane. In the main back washing, clogging substances on the separation membrane are removed in a direction opposed to the direction of pulse back washing, by selecting the destination of the drain of back washing to be the inlet side of the separation membrane.

According to the invention, the deposits on the surface of the membrane are peeled by applying a back pressure from the secondary side to the primary side of the membrane while circulating flow and membrane filtration are suspended in main back washing, and the deposits on the membrane surface are removed one after another by repeating the pulse back washing steps plural times in which washing water is allowed to return to the biological treatment tank concomitantly with a circulating flow in order to prevent the differential pressure through the membrane from increasing. Since pulse back washing is performed in a short period of time, no decrease of the operation ratio is caused. Moreover, the amount of MLSS (mixed liquor suspended solid) of the biological treatment tank is not decreased since the peeled deposits are returned to the biological treatment tank through a circulation passageway. In addition, the overall recovery ratio of water may be prevented from decreasing since the amount of use of water in the pulse back washing step is smaller than that in the main back washing step. A high flux design of the membrane filtration plant is available in the invention since the differential pressure through the membrane is suppressed from increasing even by enhancing the amount of the membrane filtration flux to enable the equipment cost and running cost to be reduced. The expense for chemicals may be also suppressed when the chemicals are used in the main back washing process, because the frequency of main back washing can be reduced.

While screenings may be clogged at a part or all of the sludge inlet side of the membrane depending on the shape of the separation membrane in conventional process, it is possible to remove these clogged substances by selecting the destination of the drain of back wash water to be the sludge inlet side of the separation membrane when the sludge is discharged out of the membrane module in the main back washing.

### BRIEF DESCRIPTION OF THE DRAWINGS

Fig. 1 is a flow diagram showing the discharge passageway of back wash water in pulse back washing; and
Fig. 2 a flow diagram showing the discharge passageway of back wash water in main pulse back washing.

### DETAILED DESCRIPTION OF THE INVENTION

Preferred embodiments of the invention will be described below.

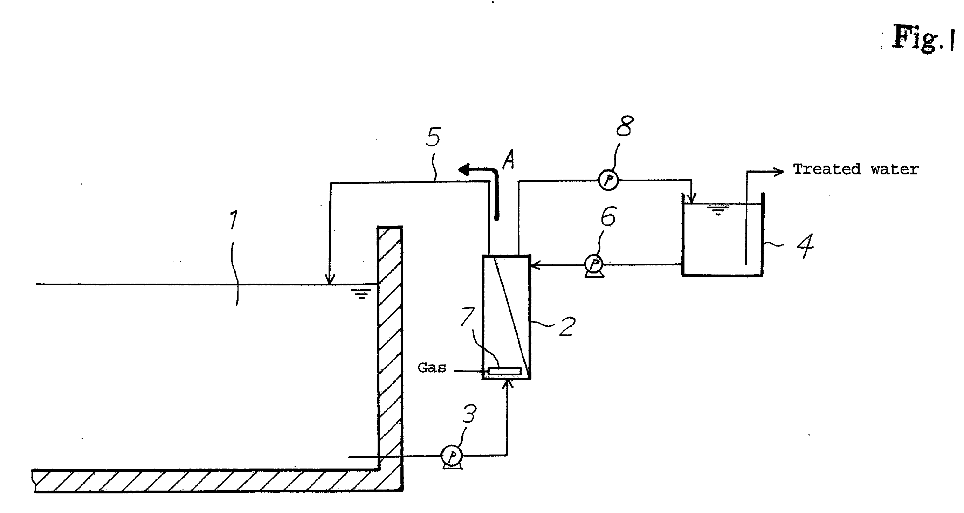

In Fig. 1, reference numeral 1 denotes a biological treatment tank, and reference numeral 2 denotes a separation membrane for filtrating tank water extracted from the biological treatment tank 1 through a membrane. The biological treatment tank 1 is an aeration tank for activated sludge treatment, wherein tank water containing a large amount of activated sludge is injected into the separation membrane 2 with a filtration pump 3 to filtrate tank water. However, the biological treatment is not necessarily restricted to the conventional activated sludge process, and may be a biological nitrogen-removal process(preanoxic/postanoxic), an A/O (Phoredox) process, an A2O (Anaerobic/Anoxic/Oxic)process, a step-feed biological nitrogen-removal process , or step-feed modified Bardenpho process.

While the separation membrane 2 is an MF membrane or a UF membrane that may be made of polymers or ceramics, a ceramic membrane is advantageous for its chemical resistance and pressure resistant strength. While various configurations of the membrane including monolithic, tubular or honeycomb shapes may be available, the membrane is preferably configured so as to provide a round or polygonal (square or more) inner channels. Either an external or internal pressurizing type of membrane may be used. However, a ceramic monolithic membrane of the external pressurizing type is used in this embodiment.

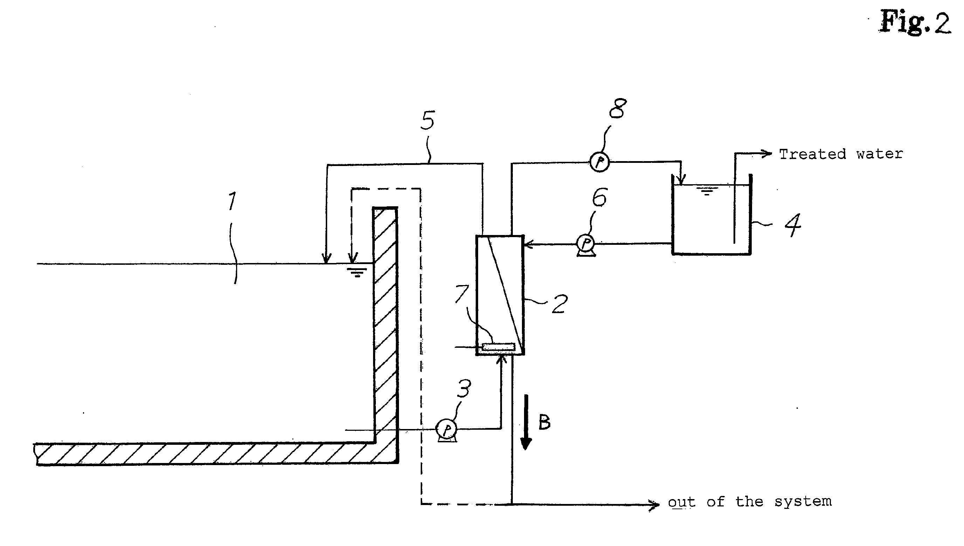

A cross-flow method is used for membrane filtration with the separation membrane 2, wherein a portion of tank water injected into the separation membrane 2 with the filtration pump 3 is filtrated through the membrane and sent to the treatment filtrate tank 4, while the rest is returned to the biological treatment tank 1 through a circulation passageway 5. While a pump 8 is preferably provided between the separation membrane 2 and filtrate tank 4 as shown in Figs. 1 and 2 for efficiently conducting membrane filtration, this pump 8 may be omitted. The membrane filtration flux of the separation membrane 2 is usually designed to be 2.0 m/d or less, since a flux of more than 2.0 m/d may cause a decrease of operation ratio and recovery ratio of water because the rate of increase of the amount and compaction of the deposits on the membrane surface increases to force the number of the main back washing steps to be increased.

However, plural times of pulse back washing are applied during the main back washing step when membrane filtration is suspended. The pulse back washing step is applied within a short period of time, wherein the deposits on the membrane surface is peeled by applying a back pressure from the secondary side to the primary side of the membrane using a back washing pump 6 or compressed air, and the peeled solid is returned to the biological treatment tank 1 concomitantly with a circulating flow through the circulation passageway 5 as shown by the arrow A in Fig. 1. Therefore the decrease of the biological treatment activity can be prevented,because MLSS in the biological treatment tank doesn't decrease.

The pulse back wash step is applied at a stage when the transmembrane pressure difference (TMP) is 80% or less, preferably 50% or less, of the permissible TMP. For example, when the permissible TMP is 100 kPa, pulse back washing of the membrane is preferably applied when the TMP is 10 to 50 kPa. A sufficient effect for peeling the deposits cannot be attained when pulse back washing is applied at a differential pressure through the membrane of exceeding 80% of the permissible TMP. When back washing is applied with compressed air, on the other hand, the pressure for pulse back washing may be adjusted to be lower than the pressure for main back washing. For example, while a back pressure of 450 to 500 kPa is used when main back washing is applied using compressed air for the ceramic membrane, the back pressure may be 100 to 300 kPa that is lower than the pressure applied for main back washing when pulse back washing is applied using compressed air.

For accelerating the deposits to be peeled from the membrane surface, a stream of a gas-liquid mixed phase may be formed at the primary side of the membrane by supplying a gas such as air, ozone or nitrogen from gas supply means 7 provided at the primary side of the separation membrane 2 as shown in Fig. 1. Such gas-liquid mixed phase stream permits the deposits on the membrane surface to be physically peeled by an agitation effect of the gas. An effect for decomposing the deposits by oxidation may be expected when ozone is used as the gas.

A combination of plural times of pulse back washing and main back washing permits the TMP to be recovered at a stage when the increment of the TMP is small. Consequently, the membrane filtration flux of the separation membrane 2 may be enhanced. The TMP gradually increases since a sufficient effect for peeling the deposit cannot be obtained merely by pulse back washing, /while screenings such as residues present in the tank water at the sludge inlet of the separation membrane are also gradually deposited. Consequently, the diameter of the sludge flow passageway at the sludge inlet portion of the separation membrane 2 cannot be reduced to, for example, 5 mm or less. It should be noted that an adverse effect of deposition of the screenings may cause an increase of the load of the filtration pump 3, and progress of clogging of the membrane since only a part of the membrane instead of the entire membrane is not used because tank water is not distributed over the entire channel of the separation membrane 2. Another adverse effect that the diameter of the sludge flow passageway cannot be reduced is that the membrane area per unit volume of the separation membrane cannot be increased.

Main back washing is applied for every pulse back washing of about 2 to 10 times in the invention. Operation of the filtration pump 3 is suspended to stop membrane filtration, and a larger amount of back wash water and a higher back wash pressure than pulse back washing are applied from the filtrate side to the raw water of the membrane as shown in Fig. 2 using the back wash pump 6 and pneumatic pressure so that the deposit on the membrane surface are peeled. The peeled deposit by main back wash is discharged out of the system in the direction shown by the arrow B in the drawing, or is returned to the biological treatment tank 1 as shown by the broken line in Fig. 2. The difference between main back washing and pulse back washing is shown in Table 1. Main backwashing may be applied once per 0.5 to 3 hours or, more preferably, main back washing is applied once per several times of main back washing using chemical cleaning together.

**Table 1**

| | Main back washing* | Pulse back washing |
|---|---|---|
| Circulation flow of sludge | Suspend Suspend | Continue to flow Continue to flow |
| Destination of discharge of back wash drain | Discharge at the sludge inlet side of the separation membrane | Discharge in the direction of flow of the circulation flow of the sludge |
| Back wash pressure | 450 to 500 kPa | 100 to 300 kPa |
| Amount of use of water** | 1 | 1/4 |
| Required time | 1 to 3 minutes | less than 1 minutes |

| | | |
|---|---|---|
| * Only backwashing with water, or back washing with water plus blowing (chemical cleaning may be used together) | | |
| ** The ratio when the amount of use of water in main back washing is defined to be 1 | | |

Each pulse back washing may be applied within a quite short period of time. Since the pulse back washing time may be less than 1 minute in contrast to the time of 1 to 3 minutes usually required for main back washing (the time required for resuming filtration after suspending filtration by suspending circulating flow and back wash and resuming circulation flow), the total amount of back washing water may be largely reduced. Since the interval of main back washing can be prolonged with a high flux of the membrane filtration according to the invention, the overall recovery ratio of water can be improved. The amount of use of chemicals may also be reduced when a chemical is used for main back washing. Since stable operation is possible even when tank water contains a few amount of screenings, the mesh size of a screen usually attached at an inlet portion of original water of the biological treatment tank may be increased, or the screen may be replaced with a primary sedimentation basin.

### Example

Tank water in the activated sludge treatment tank of sewage shown in Fig. 1 was extracted out of the tank and circulated, and was filtrated by a cross-flow method through a ceramic membrane by applying an inner pressure. The separation membrane used is a monolithic membrane (with a pore diameter of the membrane of 0.1 µm, and a membrane tube diameter of 4 mm) manufactured by the applicants' company. A stable operation was impossible at every 45 minutes of main back washing, because the TMP rapidly increased by operating at a circulating water rate of 1.0 m/s and a membrane filtration flux of 2.4 m/d. Stable operation was also impossible by using a gas-liquid mixed phase stream at the primary side of the membrane by supplying air from gas supply means at a rate of 0.11 m/s. On the contrary, stable operation was possible by applying pulse back washing at every 15 minutes using 1/4 volume of water relative to main back washing under a condition of 1.0 m/s of circulating water rate, 2.4 m/d of filtration membrane flux and 0.11 m/s of air flow rate.

Pulse back washing for applying a back pressure from the filtrate side to the raw water side of the membrane is repeated plural times for recovering a TMP during usual main back washing applied by suspending membrane filtration, when the TMP is increased when tank water extracted out of a biological treatment tank 1 is filtrated through the membrane by a cross-flow method. Pulse back washing is applied at a stage when the TMP is 80% or less of the permissible TMP to peel the deposits on the membrane surface, and the peeled deposits are returned to the biological treatment tank concomitantly with a circulating flow. Clogging substances on the separation membrane is removed in a direction opposite to the direction of pulse back washing by selecting the destination of discharge of back wash drain to be the inlet side of the separation membrane in the main back wash step.

## Claims

1. A method for cleaning a separation membrane for filtrating tank water extracted out of a biological treatment tank through the membrane by a cross-flow method, comprising the steps of:
peeling deposits on the membrane surface by applying a back pressure from the filtrate side to the raw water side of the membrane during main back washing applied by suspending membrane filtration; and
repeating pulse back washing plural times by returning the peeled deposits to the biological treatment tank concomitantly with a circulating stream.

2. The method for cleaning the separation membrane according to Claim 1, wherein pulse back washing is applied at a stage when a TMP is 80% or less of a permissible TMP.

3. The method for cleaning the separation membrane according to Claim 1, wherein clogging substances on the separation membrane is removed in a direction opposite to the direction of pulse back washing by selecting the destination of discharge of back wash drain to be the inlet side of the separation membrane in the main back wash step.
